**Europäisches Patentamt**

**European Patent Office**

**Office européen des brevets**

(19)

(11) Veröffentlichungsnummer: **0 204 965**
**B1**

(12) **EUROPÄISCHE PATENTSCHRIFT**

(45) Veröffentlichungstag der Patentschrift:
03.01.90

(21) Anmeldenummer: **86106258.6**

(22) Anmeldetag: **07.05.86**

(51) Int. Cl.⁴: **E04D 3/30**, E04D 3/362,
F24J 2/04

(54) Bauelement zur Verkleidung von Gebäudeaussenwänden, insbesondere Dachabdeckung.

(30) Priorität: **11.06.85 DE 3520909**

(43) Veröffentlichungstag der Anmeldung:
**17.12.86 Patentblatt 86/51**

(45) Bekanntmachung des Hinweises auf die Patenterteilung:
**03.01.90 Patentblatt 90/1**

(84) Benannte Vertragsstaaten:
**AT CH DE FR LI**

(56) Entgegenhaltungen:
AT-A- 375 768
DE-A- 3 219 449
US-A- 2 488 887
US-A- 3 218 772
US-A- 4 319 437

(73) Patentinhaber: **Pfeifer, Johann B., Römerstrasse 60,
D-6530 Bingen-Sponsheim(DE)**
Patentinhaber: **Weber, Umbert, Dr., Unterriethstrasse 26,
D-6200 Wiesbaden(DE)**

(72) Erfinder: **Pfeifer, Johann B., Römerstrasse 60,
D-6530 Bingen-Sponsheim(DE)**
Erfinder: **Weber, Umbert, Dr., Unterriethstrasse 26,
D-6200 Wiesbaden(DE)**

(74) Vertreter: **Popp, Eugen, Dr. et al, MEISSNER, BOLTE &
PARTNER Widenmayerstrasse 48 Postfach 86 06 24,
D-8000 München 86(DE)**

ACTORUM AG

## Beschreibung

Die vorliegende Erfindung betrifft ein Bauelement zur Verkleidung von Gebäudeaußenwänden, insbesondere zur Abdeckung von Dächern, gemäß dem Oberbegriff des Patentanspruches 1.

Derartige Bauelemente hat der Erfinder bereits in der DE-A 3 219 449 (Fig. 6) vorgeschlagen. Diese Bauelemente zeichnen sich durch einen hohen Wärmeaustauschgrad und schönes Aussehen aus. Das Aneinanderfügen sowie die Befestigung der bekannten Bauelemente an einem Untergrund sind jedoch relativ aufwendig, und zwar bedingt durch ihren S-förmigen Querschnitt. Die Bauelemente müssen regelrecht miteinander verhakt werden. Dieses Verhaken kann zwar durch eine Konstruktion entsprechend der US-A 4 319 437 vermieden werden, die ein Bauelement zur Abdeckung von Dächern beschreibt, das eine im Einbauzustand untere etwa C-förmige Randausnehmung aufweist, die in Richtung zum anderen Rand und in Richtung zum darunterliegenden Bauelement offen ist. Des weiteren sind jedoch bei der Konstruktion nach der DE-A 3 219 449 zur Befestigung der Bauelemente am Untergrund noch gesonderte, jeweils vom oberen Rand abstehende Befestigungslaschen vorgesehen, in deren Bereich das eingeschlossene Wärmetauscherrohr zum Teil freiliegt mit der Folge eines verminderten Wärmeaustausches.

Gegenüber diesem Stand der Technik liegt der Erfindung die Aufgabe zugrunde, ein Bauelement der eingangs genannten Art so weiterzubilden, daß bei verbessertem Wärmeübergang zwischen Bauelement und eingeschlossenem Wärmetauscherrohr eine wesentlich einfachere Montage möglich ist.

Diese Aufgabe wird erfindungsgemäß durch die gekennzeichnenden Maßnahmen des Patentanspruches 1 gelöst.

Zum Aneinandersetzen der erfindungsgemäß ausgebildeten Bauelemente jeweils unter Einschluß eines Wärmetauscherrohres brauchen die Bauelemente mit ihren einander zugewandten Randbereichen lediglich ineinandergesteckt zu werden. Eine komplizierte gegenseitige Verhakung entfällt. Des weiteren brauchen zur Befestigung der Bauelemente am Untergrund keine Befestigungslaschen aus gewölbten Randbereichen ausgeschnitten zu werden. Dementsprechend eng wird ein jeweils zwischen zwei benachbarten Bauelementen eingeschlossenes Wärmetauscherrohr über die gesamte Länge desselben umschlossen. Dadurch wird ein gegenüber dem Stand der Technik erhöhter Wärmeaustauschgrad zwischen Wärmetauscherrohr und Bauelement bzw. Fassaden- oder Dachverkleidung erzielt.

Die Dehnungsfalten weisen im Vergleich zum Stand der Technik eine wesentlich größere Höhe auf. Insbesondere ist die Höhe gegenüber der Grundfläche des Bauelementes gleich oder größer als die Weite der unteren Randabbiegung, insbesondere etwa 10 bis 15 mm. Die Dehnungsfalten tragen auch ganz erheblich zur Erhöhung der Stabilität der Bandprofile bei.

Durch die Ausbildung von Schlitzen im Bereich der unteren Randabbiegung jeweils in Verlängerung der Dehnungsfalten ist es möglich, die Bandprofile auf eine Haspel aufzuwickeln bzw. von dieser bei Bedarf wieder abzuwickeln. Dieses Auf- und Abwickeln wird durch die obere Randabkantung nicht behindert, vor allem wenn diese entsprechend Anspruch 2 ausgebildet ist. Diese Ausbildung ist auch hinsichtlich des erhöhten Wärmeaustauschgrades von besonderer Bedeutung. Das Wärmetauscherrohr wird dadurch praktisch über die gesamte Länge und Umfang eng umschlossen. Vorzugsweise übt die obere Randabkantung eine elastische Vorspannung auf das in der unteren Randabbiegung eines oberhalb montierten Bauelementes angeordneten Wärmetauscherrohres aus dahingehend, daß es in die untere Randabbiegung regelrecht hineingedrückt wird. Die obere Randabkantung stellt somit eine Art Federelement dar.

Die untere Randabbiegung ist hinsichtlich ihrer Abmessung, nämlich Weite, jeweils allein durch das von einem Wärmetauschermedium durchströmte Rohr bestimmt, nicht dagegen durch die Höhe der Dehnungsfalten. Diese werden im Anschlußbereich überlappend aneinandergeschoben. Dadurch entsteht in diesem Bereich auch kein allzu großer Freiraum für das Eindringen von Wasser. Es werden lediglich im Überlappungsbereich der Dehnungsfalten kleine Lüftungsöffnungen geschaffen, die eine ausreichend gute Hinterlüftung der montierten Fassade bzw. Dachabdeckung sowie Abführung von Schwitzwasser gewährleisten.

Statt einer unteren C-förmigen Randabbiegung, kann diese im Querschnitt selbstverständlich auch U-förmig oder trapezförmig ausgebildet sein. Es muß nur gewährleistet sein, daß ein Wärmetauscherrohr möglichst dicht anliegend an der Begrenzung der unteren Randabbiegung in dieser angeordnet werden kann. Nur dann ist ein hoher Wärmeaustauschgrad erzielbar. Dazu ist jedoch auch die oben beschriebene obere Randabkantung erforderlich, die darüber hinaus dazu dient, das Wärmetauscherrohr in der unteren Randabbiegung zu halten.

Die Bandprofile bestehen vorzugsweise aus Aluminiumblech oder Edelstahlblech. Sie können auch aus verzinktem Stahlblech bestehen. In diesem Fall ist es besonders wichtig, daß keine thermisch bedingten Relativverschiebungen zwischen aneinandergesetzten Bandprofilen auftreten, die die verzinkte Oberfläche zerstören könnten. Derartige Beschädigungen würden dann zu unerwünschten Korrosionen führen.

Die untere Randabbiegung kann jeweils auf der Seite der Dehnungsfalten oder auf der der Dehnungsfalten gegenüberliegenden Seite ausgeformt sein. Im letztgenannten Fall wird bei aneinanderfügen von Bandprofilen eine relativ große Stufung erhalten; diese ist im erstgenannten Fall etwas geringer, insofern zeichnet sich die erfindungsgemäße Konstruktion durch eine zusätzliche Variabilität aus.

Vorzugsweise sind die unteren Ränder eines jeden Bauelementes zwischen zwei Dehnungsfalten zur Längserstreckung des Bauelementes bzw. Horizontalen geringfügig geneigt, so daß sich unterhalb der Bauelemente ansammelndes Kondenswasser ungehindert abfließen kann, und zwar jeweils im Be-

2

reich der Schlitze in Verlängerung des sich etwa lotrecht erstreckenden Dehnungsfalten.

Weitere konstruktive Details sind in den Ansprüchen 3 bis 6 beschrieben.

Nachstehend wird ein Ausführungsbeispiel eines erfindungsgemäß ausgebildeten Bandprofils samt Montage desselben anhand der beigefügten Zeichnung näher beschrieben. Es zeigen:

Fig. 1 einen Teil eines erfindungsgemäß ausgebildeten Bandprofils in perspektivischer Ansicht;

Fig. 2 zwei aneinandergesetzte Bandprofile im schematischen Querschnitt;

Fig. 3 den Anschlußbereich von zwei aneinandergesetzten Bandprofilen im Querschnitt und vergrößertem Maßstab (Detail III in Fig. 2).

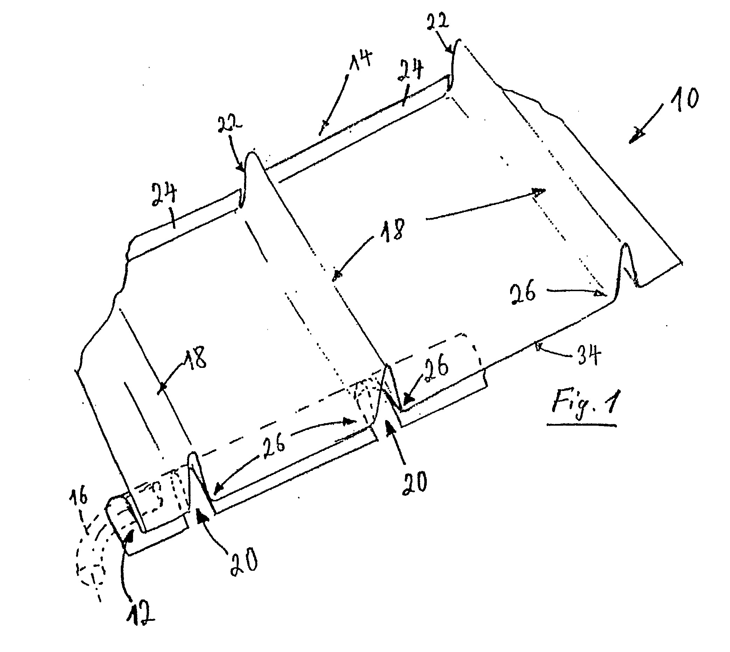

Fig. 1 zeigt einen Teil eines erfindungsgemäß ausgebildeten Bandprofils 10 in perspektivischer Ansicht. Das Bandprofil 10 besteht z. B. aus einem 0,5 mm starken Aluminiumblech und dient vornehmlich zur Abdeckung von Gebäude-Schrägdächern. Der untere Rand des Bandprofils 10 ist mit einer etwa C-förmigen Randabbiegung 12 versehen zur Aufnahme des oberen Randes 14 eines darunter angeordneten entsprechend ausgebildeten Bandprofils, und zwar unter umgreifender Fixierung eines dazwischen angeordneten, von einem Wärmetauschermedium durchströmten Rohres 16. Das Bandprofil 10 weist ferner im Abstand voneinander angeordnete (z.B. im Abstand von etwa 10 bis 15 cm) sich jeweils etwa lotrecht erstreckende Dehnungsfalten 18 auf, in deren Verlängerung die untere Randabbiegung 12 jeweils geschlitzt ist. Diese Schlitze sind mit der Bezugsziffer 20 gekennzeichnet. Die so ausgebildeten Bandprofile 10 sind unter Fluchtung und Überlappung der lotrecht verlaufenden Dehnungsfalten 18 aneinandersetzbar, und zwar unter dichter Umschließung der in die untere Randabbiegung eingesetzten Wärmetauscherrohre 16. Bei dem dargestellten Ausführungsbeispiel befindet sich die untere Randabbiegung 12 an der den Dehnungsfalten 18 gegenüberliegenden Seite des Bandprofils 10. Es ist jedoch genau so gut denkbar, daß die untere Randabbiegung 12 sich zwischen den Dehnungsfalten 18 erstreckend auf derselben Seite wie die Dehnungsfalten 18 befindet.

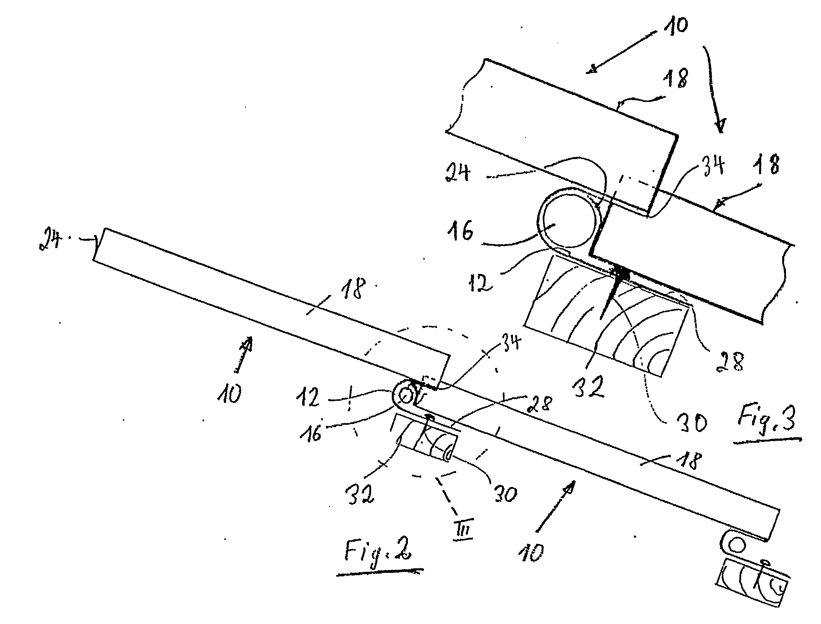

Den Fig. 2 und 3, die zwei übereinander angeordnete und auf einer Dach-Unterkonstruktion 32 befestigte Bandprofile 10 der beschriebenen Art in schematischer Seitenansicht bzw. in schematischem Teil-Querschnitt zeigen, kann entnommen werden, daß der freie Schenkel der unteren, etwa C-förmigen Randabbiegung 12 über den unteren Rand 34 des Bandprofiles 10 vorsteht (Abschnitt 28). An diesem vorstehenden Abschnitt 28 werden die Bandprofile 10 mittels Nägel 30 oder dgl. an der Unterkonstruktion 32 befestigt. Aus Gründen der Materialersparnis ist es natürlich nicht erforderlich, daß der freie Schenkel der unteren Randabbiegung 12 über die gesamte Länge des Bandprofiles vorsteht. Die Abschnitte 28 können auch als vorstehende Befestigungslaschen ausgebildet sein. Auf jeden Fall wird durch den vorstehenden Abschnitt 28 bzw. entsprechend vorstehende Befestigungslaschen die Umschließung des Wärmetauscherrohres 16 und damit der Wärmekontakt zwischen Wärmetauscherrohr 16 und Bandprofile nicht beeinträchtigt. Des weiteren ist der über den unteren Rand 34 eines Bandprofiles 10 vorstehende Abschnitt 28 zur Befestigung des Bandprofiles an einer Unterkonstruktion gut zugänglich. Die Bandprofile können daher in einfacher Weise von oben nach unten aneinandergesetzt und an einer Unterkonstruktion (Gebäudewand oder Dachkonstruktion) befestigt werden.

Der obere Rand 14 des Bandprofils 10 ist bei der Ausführungsform nach Fig. 1 durch die oberen Stirnenden 22 der Dehnungsfalten 18 einerseits und eine zwischen den Dehnungsfalten 18 ausgebildete Randabkantung 24 andererseits gebildet, wobei sich die obere Randabkantung 24 zur selben Seite hin erstreckt wie die Dehnungsfalten 18. Die Höhe der Dehnungsfalten 18 ist gleich, insbesondere jedoch größer, z.B. nahezu doppelt so groß, als die Weite der unteren Randabbiegung 12, während die Höhe der oberen Randabkantung 24 etwa der lichten Weite der unteren Randabbiegung 12 entspricht. Die Höhe der Dehnungsfalten 18 ist also durch die Weite der unteren Randabbiegung 12 nicht begrenzt und kann den Temperaturschwankungsbedürfnissen und den damit verbundenen Wärmedehnungen entsprechend angepaßt werden.

Die Breite der in Verlängerung der lotrechten Dehnungsfalten 18 ausgebildeten Schlitze 20 im Bereich der unteren Randabbiegung 12 entspricht etwa der größten Breite der Dehnungsfalten 18, insbesondere im Bereich des Anschlusses derselben am Bandprofil 10. Dieser Anschlußbereich ist in der Zeichnung mit der Bezugsziffer 26 gekennzeichnet.

Nach den Fig. 2 und 3 ist die obere Randabkantung 24 in Richtung vom Bandprofil 10 weggewölbt bzw. gebogen ausgebildet, so daß das zwischen der unteren Randausnehmung 12 und oberen Randabkantung 24 angeordnete Rohr 16 eng und damit gut wärmeübertragend umschlossen ist. Der Wölbungsradius der oberen Randabkantung 24 entspricht etwa dem halben Außendurchmesser des Wärmetauscherrohres 16. Vorzugsweise übt die obere Randabkantung 24 im montierten Zustand eine elastische Vorspannung auf das Wärmetauscherrohr 16 aus derart, daß dieses durch die obere Randabkantung 24 in die untere Randabbiegung 12 eines jeweils darüber angeordneten Bandprofils regelrecht hineingedrückt wird. Die obere Randabkantung 24 hält damit das Wärmetauscherrohr dauerhaft in dichter Anlage am Bandprofil, so daß dauerhaft ein guter Wärmekontakt sichergestellt ist. Auch werden durch die Biegeelastizität der oberen Randabkantung 24 Durchmesserveränderungen des Wärmetauscherrohres aufgrund veränderten Temperaturen so ausgeglichen, daß stets die gewünschte dichte Anlage des Wärmetauscherrohres am Bandprofil im Bereich der unteren Randabkantung und damit ein hoher Wärmeleitkontakt gewährleistet sind.

Das Wärmetauscherrohr 16 ist vorzugsweise ein flexibles Rohr, das in die untere Randabbiegung 12 einpreßbar ist mittels eines entsprechend geformten Preßwerkzeuges und das ohne Unterbrechung, d.h. fortgesetzt, über die gesamte Dachabdeckung bzw. Fassade verlegbar ist. Das Einführen des oberen Randes 14 in die untere Randabbiegung 12 wird durch die Verlegung des Wärmetauscherrohres 16 nicht behindert. Die Dehnungsfalten 18 der jeweils unteren Bandprofile 10 werden in die Schlitze 20 des jeweils darüber angeordneten Bandprofils 10 unter Überlappung eingeführt.

Die erfindungsgemäße Konstruktion erlaubt eine relativ spielfreie Aneinanderfügung von Bandprofilen mit der Folge, daß auch bei starken Winden keine Klappergeräusche entstehen können. Eine gegenseitige Lockerung der Bandprofile durch Wärmedehnungen ist aufgrund der gewählten Konstruktion ebenfalls nicht möglich.

## Patentansprüche

1. Bauelement zur Verkleidung von Gebäudeaußenwänden, insbesondere zur Abdeckung von Dächern, in Form eines Bandprofils (10) mit einer im Einbauzustand unteren etwa C-förmigen Randabbiegung (12) zur Aufnahme des oberen Randes (14) eines darunter angeordneten Bandprofiles (10) unter umgreifender Fixierung eines dazwischen angeordneten, von einem Wärmetauschermedium durchströmten Rohres (16), wobei das Bandprofil (10) im Abstand voneinander angeordnete, sich jeweils etwa lotrecht erstreckende Dehnungsfalten (18) aufweist, in deren Verlängerung die untere Randabbiegung (12) jeweils geschlitzt ist (Schlitze 20), so daß die Bandprofile (10) unter Fluchtung und Überlappung der lotrecht verlaufenden Dehnungsfalten (18) aneinandersetzbar sind, und wobei der im Einbauzustand obere Rand (14) des Bandprofiles (10) durch die oberen Stirnenden (22) der Dehnungsfalten (18) einerseits und eine zwischen den Dehnungsfalten (18) ausgebildete Randabkantung (24) andererseits gebildet ist, dadurch gekennzeichnet, daß die untere etwa C-förmige Randabbiegung (12) in Richtung zum unteren Rand (34) des Bandprofiles (10) und in Richtung zum darunterliegenden Bandprofil offen ist, daß die Höhe der Dehnungsfalten (18) gleich oder größer ist als die lichte Weite der unteren Randabbiegung (12), während die Höhe der oberen Randabkantung (24) etwa der lichten Weite der unteren Randabbiegung (12) entspricht, daß die Breite der in Verlängerung der lotrechten Dehnungsfalten (18) ausgebildeten Schlitze (20) im Bereich der unteren Randabbiegung (12) etwa der größten Breite, mindestens jedoch der Breite der Dehnungsfalten (18) auf halber Höhe entspricht, insbesondere im Bereich (26) ihres Anschlusses am Bandprofil (10) und daß zumindest ein Teil des freien Schenkels der unteren etwa C-förmigen Randabbiegung (12) eines jeden Bandprofils (10) über den unteren Rand (34) desselben vorsteht (Abschnitt 28), an dem das Bandprofil (10) an einer Unterkonstruktion (32) befestigbar ist.

2. Bauelement nach Anspruch 1, dadurch gekennzeichnet, daß die Randabkantung (24) in Richtung vom Bandprofil (10) weggewölbt bzw. gebogen ausgebildet ist, so daß das zwischen der unteren Randabbiegung (12) eines oberen Bandprofils und der oberen Randabkantung (24) eines unteren Randprofiles angeordnete Rohr (16) eng und damit gut wärmeübertragend umschlossen ist.

3. Bauelement nach Anspruch 2, dadurch gekennzeichnet, daß im montierten Zustand die obere Randabkantung (24) unter elastischer Vorspannung am Rohr (16) anliegt.

4. Bauelement nach einem der Ansprüche 1 bis 3, dadurch gekennzeichnet, daß es auf eine Haspel aufwickelbar bzw. von dieser bei Bedarf abwickelbar ist.

## Claims

1. A building unit for facing external building walls, especially for covering roofs, in the form of a strip profile (10) having an approximately C-shaped edge bend (12) which in the mounted state is the lower edge bend, for receiving the upper edge (14) of a strip profile (10) disposed thereunder by encompassing and fixing a pipe (16) which is located therebetween and through which a heat exchange medium flows, said strip profile (10) having spaced-apart expansion folds (18) each of which extends approximately perpendicularly and in the extension of which the lower edge bend (12) is respectively slotted (slots 20) so that the strip profiles (10) can be put together with the perpendicularly extending expansion folds (18) being in alignment with and overlapping each other, and the edge (14) of the strip profile (10) which in the mounted state is the upper edge being formed by the upper end faces (22) of the expansion folds (18), on the one hand, and by an edge fold (24) formed between the expansion folds (18), on the other hand, characterized in that the approximately C-shaped lower edge bend (12) is open towards the lower edge (34) of the strip profile (10) and towards the strip profile disposed thereunder, that the height of the expansion folds (18) is equal to or greater than the inside diameter of the lower edge bend (12) whereas the height of the upper edge fold (24) approximately corresponds to the inside diameter of the lower edge bend (12), that in the vicinity of the lower edge bend (12) the width of the slots (20) formed in the extension of the perpendicular expansion folds (18) approximately corresponds to the maximum width, but at least to the width of the expansion folds (18) halfway up, in particular in the region (26) of its junction with the strip profile (10), and that at least part of the free leg of the approximately C-shaped lower edge bend (12) of each strip profile (10) projects (portion 28) beyond the lower edge (34) thereof where the strip profile (10) can be secured to a sub-structure.

2. A building unit according to claim 1, characterized in that the edge fold (24) is curved or bent away from the strip profile (10) so that the pipe (16) disposed between the lower edge bend (12) of an upper strip profile and the upper edge fold (24) of a lower edge profile is enclosed tightly and therefore with good heat transfer effect.

3. A building unit according to claim 2, characterized in that in the mounted state the upper edge fold (24) engages the pipe (16) with elastic prestress.

4. A building unit according to any one of claims 1 to 3, characterized in that the building unit can be wound onto a reel and if required be unwound therefrom, respectively.

**Revendications**

1. Elément de construction pour le revêtement de murs extérieurs de bâtiments, en particulier pour la couverture de toits, sous la forme d'une bande profilée (10) avec un rebord (12) inférieur à l'état monté présentant sensiblement une forme de C et destiné à recevoir le bord supérieur (14) d'une bande profilée (10) disposée au-dessus, avec fixation enveloppante d'un tuyau (16) placé entre les deux rebords et traversé par un fluide caloporteur, la bande profilée (10) présentant des plis de dilatation (18) disposés à distance les uns des autres et s'étendant respectivement dans le sens sensiblement perpendiculaire, dans le prolongement desquels le rebord inférieur (12) est respectivement fendu (fentes 20) de telle façon que les bandes profilées (10) peuvent être assemblées avec alignement et recouvrement des plis de dilatation (18) d'extension perpendiculaire, et le rebord (14) supérieur à l'état monté de la bande profilée (10) étant constitué par les extrémités frontales supérieures (22) des plis de dilatation (18) d'une part et par un rebord (24) conformé entre les plis de dilatation (18), d'autre part, caractérisé en ce que le rebord inférieur (12) conformé sensiblement en C est ouvert en direction du bord inférieur (34) de la bande profilée (10) et en direction de la bande profilée placée au-dessous, que la hauteur des plis de dilatation (18) est égale ou supérieure au diamètre intérieur du rebord inférieur (12), alors que la hauteur du rebord supérieur (24) correspond à peu près au .diamètre intérieur du rebord inférieur (12), que dans la région du rebord inférieur (12) la largeur des fentes (20) conformées dans le prolongement des plis de dilatation (18) perpendiculaires correspond approximativement à la largeur maximale, mais au moins à la largeur des plis de dilatation (18) à mi-hauteur, en particulier dans la région (26) de leur raccordement à la bande profilée (10), et que du moins une partie de la branche libre du rebord inférieur (12) sensiblement en forme de C de chaque bande profilée (10) dépasse du bord inférieur (34) de celle-ci (section 28) sur laquelle la bande profilée (10) peut être fixée sur une structure porteuse (32).

2. Elément de construction selon la revendication 1, caractérisé en ce que le rebord (24) est cintré et respectivement plié de façon à s'écarter de la bande profilée (10) de telle façon que le tuyau (16) disposé entre le rebord inférieur (12) d'une bande profilée supérieure et le rebord supérieur (24) d'une bande profilée inférieure est étroitement enserré et assure ainsi un bon contact thermoconducteur.

3. Elément de construction selon la revendication 2, caractérisé en ce que, à l'état monté, le rebord supérieur (24) est appliqué sous précontrainte élastique contre le tuyau (16).

4. Elément de construction selon l'une des revendications 1 à 3, caractérisé en ce qu'il peut être enroulé sur un dévidoir et respectivement déroulé de celui-ci en cas de besoin.

Fig. 1

EP 0 204 965 B1

Fig.2

Fig.3